# EUROPEAN PATENT APPLICATION

(11) **EP 4 380 278 A1**
(43) Date of publication of application: **05.06.2024**
(21) Application number: 22857557.7
(22) Date of filing: 28.07.2022
(51) Int. Cl.: H04W 72/04, H04L 5/00

(54) **COMMUNICATION METHOD AND DEVICE**

(30) Priority: 18.08.2021 CN 202110951071
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); HU, Xingxing, Shenzhen, Guangdong 518129 (CN)
(74) Representative: Maiwald GmbH
(86) International application number: PCT/CN2022/108649
(87) International publication number: WO 2023/020244

(57) **Abstract**

This application provides a communications method and apparatus. The method includes: determining first information, where the first information indicates a scheduling manner of a system information block, the first information is determined based on at least one of second information, third information, or fourth information, the second information indicates a quantity of terminal devices that expect to obtain the system information block, and when a current scheduling manner of the system information block is an on-demand scheduling manner, the fourth information indicates at least one of the following: a quantity of times that the system information block is requested; and sending the first information to a network device. According to the foregoing method, a proper scheduling manner is obtained through inference based on the quantity of terminal devices that expect to obtain the system information block and information such as the quantity of times that the system information block is requested, so that a requirement of the terminal device for the system information block can be met, to reduce a waste of time-frequency resources in a cycle and reduce impact caused by the terminal device requesting the system information block in a request manner on random access of another terminal device.

## Description

### CROSS-REFERENCE TO RELATED APPLICATIONS

This application claims priority to Chinese Patent Application No. 202110951071.X, filed with the China National Intellectual Property Administration on August 18, 2021 and entitled "COMMUNICATIONS METHOD AND APPARATUS", which is incorporated herein by reference in its entirety.

### TECHNICAL FIELD

This application relates to the field of communications technologies, and in particular, to a communications method and apparatus.

### BACKGROUND

In a wireless communications system, after completing a cell search process and implementing downlink synchronization with a cell, a terminal device needs to determine information such as a system frame number and a subcarrier spacing by using system information (system information, SI). In a 5th generation (5th generation, 5G) new radio (new radio, NR) system, the system information includes the following three types: a master system information block (master information block, MIB), a system information block 1 (system information block 1, SIB1), and other system information (other system information, OSI). The OSI refers to system information other than the MIB and the SIB1. For example, the OSI may include an SIB2 to an SIB14. The MIB and the SIB1 may also be referred to as minimum system information (minimum SI), and the SIB1 may also be referred to as remaining minimum system information (remaining minimum SI, RMSI).

The SIB1 is sent in a broadcast manner, and a base station needs to send the SIB1 in each beam (beam) direction, consuming more system resources. To reduce resource consumption, an on-demand scheduling (on-demand scheduling) manner is introduced in the NR. For SI using the on-demand scheduling manner, when the terminal device needs to receive the SI, the terminal device initiates an SI request (request) to request the base station to send corresponding SI. If the base station configures a dedicated random access resource for the terminal device, the terminal device sends the SI request in a message 1 (message 1, Msg1). Otherwise, the terminal device sends the SI request in a message 3 (message 3, Msg3). After receiving the SI request in the Msg1 or the Msg3, the base station schedules the SI in an SI-window (SI-window) corresponding to the SI.

A current OSI scheduling manner is statically configured on a base station side. To be specific, maintenance personnel of the base station may configure the OSI scheduling manner as a broadcast-based scheduling manner or the on-demand scheduling manner according to an actual situation. If one SIB in the OSI is configured to be in the broadcast-based scheduling manner, but a quantity of terminal devices that actually need to receive the SIB is small, a waste of resources is caused consequently. In addition, if one SIB in the OSI is configured to be in the on-demand scheduling manner, but a quantity of terminal devices that actually need to receive the SIB is large, a large quantity of terminal devices request the SIB consequently, causing a large quantity of signaling overheads and reducing an access success rate of the terminal devices.

In conclusion, how to configure a better OSI scheduling manner is an urgent problem to be resolved.

### SUMMARY

This application provides a communications method and apparatus, to configure a better OSI scheduling manner.

According to a first aspect, this application provides a communications method. The method is performed by an AI device, or may be performed by a component (a processor, a chip, or another component) disposed in the AI device, or may be performed by a software module, or the like. The method includes: The AI device determines first information, where the first information indicates a predicted scheduling manner of a system information block, the first information is determined based on at least one of second information, third information, or fourth information, the second information indicates a quantity of terminal devices that expect to obtain the system information block, the third information indicates a current scheduling manner of the system information block, and when the current scheduling manner of the system information block is an on-demand scheduling manner, the fourth information indicates at least one of the following: a quantity of times that the system information block is requested, a quantity of preambles corresponding to the system information block, and a quantity of times that the system information block fails to be requested. The AI device sends the first information to a network device.

It can be learned from the foregoing process that a proper scheduling manner is obtained through inference by using an AI module based on the quantity of terminal devices that expect to obtain the system information block and information such as an access success rate of the terminal devices, so that a requirement of the terminal device for the system information block can be met, to reduce a waste of time-frequency resources in a cycle and reduce impact caused by the terminal device requesting the system information block in a request manner on random access of another terminal device.

In a possible design, traffic load of the network device is determined based on third information. That the first information is determined based on the second information and the third information includes: The first information is determined based on the traffic load of the network device and the quantity of terminal devices.

In a possible design, traffic load of the network device is determined based on the third information. A success rate at which the terminal device that accesses the network device requests the system information block in a random access manner is determined based on the fourth information. That the first information is determined based on the second information, the third information, and the fourth information includes: The first information is determined based on the traffic load of the network device, the quantity of terminal devices, and the success rate.

In a possible design, the method further includes: obtaining fifth information, where the fifth information is determined based on status information obtained by scheduling the system information block by the network device based on the first information, and the fifth information is used for updating a scheduling manner of the system information block.

In a possible design, there are N system information blocks, N is an integer greater than 0, and the status information includes that a success rate of accessing a network by a terminal device in a random access manner is less than or equal to a first threshold. The fifth information indicates to update scheduling manners of all or a part of the N system information blocks from the on-demand scheduling manner to a broadcast-based scheduling manner.

In a possible design, updating scheduling manners of all or a part of the N system information blocks from the on-demand scheduling manner to a broadcast-based scheduling manner includes: updating a scheduling manner of a first system information block in the N system information blocks from the on-demand scheduling manner to the broadcast-based scheduling manner. The first system information block is a system information block that is requested for a quantity of times greater than or equal to a first preset quantity of times.

In a possible design, there are N system information blocks, N is an integer greater than 0, and the status information includes at least one of the following: resource utilization of the network device is greater than or equal to a second threshold, and expected resource utilization of the network device is greater than or equal to the second threshold. The fifth information indicates to update scheduling manners of all or a part of the N system information blocks from a broadcast-based scheduling manner to the on-demand scheduling manner.

In a possible design, updating the scheduling manners of all or a part of the N system information blocks from the broadcast-based scheduling manner to the on-demand scheduling manner includes: updating a scheduling manner of a second system information block in the N system information blocks from the broadcast-based scheduling manner to the on-demand scheduling manner. A quantity of terminal devices that expect to obtain the second system information block is less than or equal to a second preset quantity.

In a possible design, there are N system information blocks, N is an integer greater than 0, and the status information includes a number of a system information block that is in the N system information blocks and whose scheduling manner needs to be changed. The fifth information indicates to change the scheduling manner of the system information block whose scheduling manner needs to be changed.

In a possible design, when the scheduling manner of the system information block is the on-demand scheduling manner, the first information further indicates the preamble corresponding to the system information block, and the preamble is used for requesting the system information block.

According to a second aspect, this application further provides a communications apparatus, where the communications apparatus has a function of implementing any method provided in the first aspect. The communications apparatus may be implemented by hardware, or may be implemented by hardware executing corresponding software. The hardware or software includes one or more units or modules corresponding to the foregoing function.

In a possible implementation, the communications apparatus includes a processor, where the processor is configured to support the communications apparatus in performing a corresponding function in the foregoing method. The communications apparatus may further include a memory, where the memory may be coupled to the processor, and stores program instructions and data that are necessary for the communications apparatus. Optionally, the communications apparatus further includes an interface circuit, where the interface circuit is configured to support communications between the communications apparatus and another device.

In a possible implementation, the communications apparatus may be an AI device, or a chip or a module in the AI device.

In a possible implementation, a structure of the communications apparatus includes a processing unit and a communications unit. The units may perform corresponding functions in the foregoing method examples. For details, refer to descriptions of the method provided in the first aspect. Details are not described herein again.

According to a third aspect, a communications method is provided. The method is performed by a network device, or may be performed by a component (a processor, a chip, a circuit, or another component) disposed in the network device, or may be performed by a software module, or the like. The method includes: The network device obtains first information, where the first information indicates a predicted scheduling manner of a system information block, the first information is determined based on at least one of second information, third information, or fourth information, the second information indicates a quantity of terminal devices that expect to obtain the system information, the third information indicates a current scheduling manner of the system information block, and when the current scheduling manner of the system information block is an on-demand scheduling manner, the fourth information indicates at least one of the following: a quantity of times that the system information block is requested, a quantity of preambles corresponding to the system information block, and a quantity of times that the system information block fails to be requested. The network device schedules the system information block based on the first information.

In a possible design, traffic load of the network device is determined based on the third information. That the first information is determined based on the second information and the third information includes: The first information is determined based on the traffic load of the network device and the quantity of terminal devices.

In a possible design, traffic load of the network device is determined based on the third information. A success rate at which the terminal device that accesses the network device requests the system information block in a random access manner is determined based on the fourth information. That the first information is determined based on the second information, the third information, and the fourth information includes: The first information is determined based on the traffic load of the network device, the quantity of terminal devices, and the success rate.

In a possible design, the method further includes: sending status information, where the status information is determined based on status information obtained by scheduling the system information block based on the first information; obtaining fifth information, where the fifth information is used for updating a scheduling manner of the system information block, and the fifth information is determined based on the status information; and updating the scheduling manner of the system information blocks based on the fifth information.

In a possible design, there are N system information blocks, N is an integer greater than 0, and the status information includes that a success rate of accessing a network by a terminal device in a random access manner is less than or equal to a first threshold. The fifth information indicates to update scheduling manners of all or a part of the N system information blocks from the on-demand scheduling manner to a broadcast-based scheduling manner.

In a possible design, the fifth information indicates to update a scheduling manner of a first system information block in the N system information blocks from the on-demand scheduling manner to the broadcast-based scheduling manner. The first system information block is a system information block that is requested for a quantity of times greater than or equal to a first preset quantity of times.

In a possible design, there are N system information blocks, N is an integer greater than 0, and the status information includes at least one of the following: resource utilization of the network device is greater than or equal to a second threshold, and expected resource utilization of the network device is greater than or equal to the second threshold. The fifth information indicates to update scheduling manners of all or a part of the N system information blocks from the broadcast-based scheduling manner to an on-demand scheduling manner.

In a possible design, the fifth information indicates to update a scheduling manner of a second system information block in the N system information blocks from the broadcast-based scheduling manner to the on-demand scheduling manner. A quantity of terminal devices that expect to obtain the second system information block is less than or equal to a second preset quantity.

In a possible design, there are N system information blocks, N is an integer greater than 0, and the status information includes a number of a system information block that is in the N system information blocks and whose scheduling manner needs to be changed. The fifth information indicates to change the scheduling manner of the system information block whose scheduling manner needs to be changed.

According to a fourth aspect, this application further provides a communications apparatus, where the communications apparatus has a function of implementing any method provided in the third aspect. The communications apparatus may be implemented by hardware, or may be implemented by hardware executing corresponding software. The hardware or software includes one or more units or modules corresponding to the foregoing function.

In a possible implementation, the communications apparatus includes a processor, where the processor is configured to support the communications apparatus in performing a corresponding function in the foregoing method. The communications apparatus may further include a memory, where the memory may be coupled to the processor, and stores program instructions and data that are necessary for the communications apparatus. Optionally, the communications apparatus further includes an interface circuit, where the interface circuit is configured to support communications between the communications apparatus and another device.

In a possible implementation, the communications apparatus may be a network device, or a chip or a module in the network device.

In a possible implementation, a structure of the communications apparatus includes a processing unit and a communications unit. The units may perform corresponding functions in the foregoing method examples. For details, refer to descriptions of the method provided in the third aspect. Details are not described herein again.

According to a fifth aspect, this application provides a communications method. The method is performed by an AI device, or may be performed by a component (a processor, a chip, or another component) disposed in the AI device, or may be performed by a software module, or the like. The method includes: The AI device obtains first indication information, where the first indication information indicates a quantity of terminal devices that expect to obtain M system information blocks, M pieces of scheduling information corresponding to the M system information blocks are carried by a first bandwidth unit, M is an integer greater than 0, and one piece of scheduling information is used for scheduling one system information block. When a preset condition is met, the AI device sends configuration information to a network device, where the configuration information indicates to cancel a control resource set 0 in the first bandwidth unit. The preset condition includes at least one of the following: A quantity of terminal devices that expect to obtain the M system information blocks is less than a third threshold; and a ratio of the quantity of terminal devices that expect to obtain the M system information blocks to a total quantity of terminal devices is less than a fourth threshold.

In a possible design, the configuration information further indicates to send the system information block to the terminal device by using RRC signaling.

According to a sixth aspect, a communications apparatus is provided, where the communications apparatus includes a processor, configured to implement the method described in the fifth aspect. The communications apparatus may further include a memory, configured to store instructions and/or data. The memory is coupled to the processor, and when the processor executes program instructions stored in the memory, the method described in the fifth aspect may be implemented. The communications apparatus may further include a communications interface, where the communications interface is used by the communications apparatus to communicate with another device. For example, the communications interface may be a transceiver, a circuit, a bus, a module, a pin, or another type of communications interface. In a possible design, the communications apparatus may be an AI device, or a chip or a module in the AI device. In a possible implementation, a structure of the communications apparatus includes a processing unit and a communications unit. The units may perform corresponding functions in the foregoing method examples. For details, refer to descriptions of the method provided in the fifth aspect. Details are not described herein again.

According to a seventh aspect, a communications method is provided. The method is performed by a network device, or may be performed by a component (a processor, a chip, a circuit, or another component) disposed in the network device, or may be performed by a software module, or the like. The method includes: The network device obtains configuration information, where the configuration information indicates to cancel a control resource set 0 in a first bandwidth unit. The network device performs data transmission by using a resource corresponding to the control resource set 0.

In a possible design, the configuration information further indicates to send the system information block to the terminal device by using RRC signaling.

According to an eighth aspect, a communications apparatus is provided, where the communications apparatus includes a processor, configured to implement the method described in the seventh aspect. The communications apparatus may further include a memory, configured to store instructions and/or data. The memory is coupled to the processor, and when the processor executes program instructions stored in the memory, the method described in the fifth aspect may be implemented. The communications apparatus may further include a communications interface, where the communications interface is used by the communications apparatus to communicate with another device. For example, the communications interface may be a transceiver, a circuit, a bus, a module, a pin, or another type of communications interface. In a possible design, the communications apparatus may be a network device, or a chip or a module in the network device.

In a possible implementation, a structure of the communications apparatus includes a processing unit and a communications unit. The units may perform corresponding functions in the foregoing method examples. For details, refer to the descriptions of the method according to the seventh aspect. Details are not described herein again.

According to a ninth aspect, a communications apparatus is provided, including a processor and a memory. The memory stores a computer program or instructions. The processor is configured to execute the computer program or the instructions stored in the memory, to implement the method in any one of the first aspect, the third aspect, or the possible implementations of any one of the first aspect or the third aspect.

According to a tenth aspect, a communications apparatus is provided, including a processor and a memory. The memory stores a computer program or instructions. The processor is configured to execute the computer program or the instructions stored in the memory, to implement the method in any one of the second aspect, the fourth aspect, or the possible implementations of any one of the second aspect or the fourth aspect.

According to an eleventh aspect, a communications apparatus is provided, including a processor and an interface circuit, and optionally, further including a memory. The memory stores a computer program or instructions. The interface circuit is configured to receive a signal from a communications apparatus other than the communications apparatus, and transmit the signal to the processor, or send a signal from the processor to a communications apparatus other than the communications apparatus. The processor is configured to execute the computer program or the instructions stored in the memory, to implement the method in any one of the first aspect, the third aspect, or the possible implementations of any one of the first aspect or the third aspect.

According to a twelfth aspect, a communications apparatus is provided, including a processor and an interface circuit, and optionally, further including a memory. The memory stores a computer program or instructions. The interface circuit is configured to receive a signal from a communications apparatus other than the communications apparatus, and transmit the signal to the processor, or send a signal from the processor to a communications apparatus other than the communications apparatus. The processor is configured to execute the computer program or the instructions stored in the memory, to implement the method in any one of the second aspect, the fourth aspect, or the possible implementations of any one of the second aspect or the fourth aspect.

According to a thirteenth aspect, a computer-readable storage medium is provided, where the computer-readable storage medium stores a computer program or instructions, and when the computer program or the instructions is/are run on a computer, the computer is enabled to implement the method in any one of the first aspect to the fourth aspect, and any possible implementation of any one of the first aspect to the fourth aspect.

According to a fourteenth aspect, a computer program product that stores computer-readable instructions is provided. When the computer-readable instructions are run on a computer, the computer is enabled to implement the method in any one of the first aspect to the fourth aspect, and any possible implementation of any one of the first aspect to the fourth aspect.

According to a fifteenth aspect, a chip is provided. The chip includes a processor, and may further include a memory, configured to execute a computer program or instructions stored in the memory, and the chip is enabled to implement the method in any one of the first aspect to the fourth aspect, and any possible implementation of any one of the first aspect to the fourth aspect.

According to a sixteenth aspect, a communications apparatus is provided, including a processor and an interface circuit. The interface circuit is configured to receive a signal from another communications apparatus other than the communications apparatus and transmit the signal to the processor, or send a signal from the processor to another communications apparatus other than the communications apparatus. The processor is configured to execute a computer program or instructions, to implement the method in any one of the first aspect or the third aspect, and any possible implementation of any one of the first aspect or the third aspect.

According to a seventeenth aspect, a communications apparatus is provided, including a processor and an interface circuit. The interface circuit is configured to receive a signal from another communications apparatus other than the communications apparatus and transmit the signal to the processor, or send a signal from the processor to another communications apparatus other than the communications apparatus. The processor is configured to execute a computer program or instructions, to implement the method in any one of the second aspect or the fourth aspect, and any possible implementation of any one of the second aspect or the fourth aspect.

According to an eighteenth aspect, a communications apparatus is provided, including a module configured to implement the method in any one of the first aspect or the third aspect, and any possible implementation of any one of the first aspect or the third aspect.

According to a nineteenth aspect, a communications apparatus is provided, including a module configured to implement the method in any one of the second aspect or the fourth aspect, and any possible implementation of any one of the second aspect or the fourth aspect.

According to a twentieth aspect, a communications system is provided. The system includes the apparatus (for example, an AI device) described in the third aspect and the apparatus (for example, a network device) described in the fourth aspect.

### BRIEF DESCRIPTION OF DRAWINGS

FIG. 1 is a schematic diagram of a network architecture according to an embodiment of this application;
FIG. 2 is a schematic diagram of an AI model according to an embodiment of this application;
FIG. 3 is a schematic diagram of a network architecture including an AI model according to an embodiment of this application;
FIG. 4 is a schematic diagram of a network architecture including an AI model according to an embodiment of this application;
FIG. 5 is a schematic diagram of a network architecture including an AI model according to an embodiment of this application;
FIG. 6 is a schematic flowchart of a communications method according to an embodiment of this application;
FIG. 7 is a schematic flowchart of a communications method according to an embodiment of this application;
FIG. 8 is a schematic flowchart of a communications method according to an embodiment of this application;
FIG. 9 is a schematic diagram of a structure of a communications apparatus according to an embodiment of this application; and
FIG. 10 is a schematic diagram of a structure of a communications apparatus according to an embodiment of this application.

### DESCRIPTION OF EMBODIMENTS

The following describes embodiments of this application in detail with reference to accompanying drawings of this specification.

Embodiments of this application may be applied to various mobile communications systems, for example, a new radio (new radio, NR) system, a global system of mobile communications (global system of mobile communications, GSM), a long term evolution (long term evolution, LTE) system, a future communications system, and other communications systems. This is not limited herein.

In embodiments of this application, interaction between a terminal device, an access network device, and a core network device is used as an example for description. It should be noted that a method provided in embodiments of this application may be applied not only to interaction between the terminal device and a network side, but also to interaction between any two devices. This is not limited in embodiments of this application.

In embodiments of this application, the terminal device may be briefly referred to as a terminal, and is a device having a wireless transceiver function or a chip that may be disposed in the device. The terminal device may also be referred to as user equipment (user equipment, UE), an access terminal, or the like. The terminal device may communicate with one or more core networks via a radio access network (radio access network, RAN).

The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), or the like. In embodiments of this application, an apparatus configured to implement a function of the terminal device may be the terminal device. Alternatively, the apparatus may be an apparatus that can support the terminal device in implementing the function, for example, a chip system. The apparatus may be installed in the terminal device or used in matching with the terminal device.

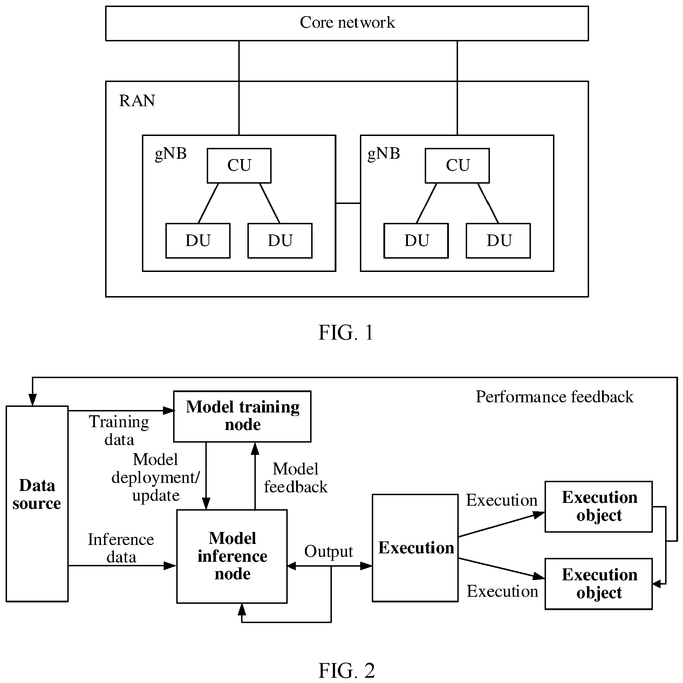

The network device in embodiments of this application may be a base station (for example, a next-generation NodeB (next-generation NodeB, gNB)) in a RAN. As shown in FIG. 1, the base station may be an architecture in which a central unit (central unit, CU) and a distributed unit are (distributed unit, DU) separated. The RAN may be connected to a core network (for example, may be a long term evolution (long term evolution, LTE) core network, or may be a 5G core network). The CU and the DU may be understood as division of the base station from a perspective of logical functions. The CU and the DU may be physically separated, or may be deployed together. A plurality of DUs may share one CU. One DU may also be connected to a plurality of CUs (not shown in the figure). The CU and the DU may be connected through an interface, for example, an interface F1. The CU and the DU may be obtained through division based on a protocol layer of a wireless network. For example, one possible division manner is that the CU is configured to execute functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to execute functions of a radio link control (radio link control, RLC) layer, a media access control (media access control, MAC) layer, a physical (physical) layer, and the like. It may be understood that division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of a protocol layer above the RLC layer are set on the CU, and remaining functions of the RLC layer and functions of a protocol layer below the RLC layer are set on the DU. In another design, functions of the CU or the DU may be alternatively obtained through division based on a service type or another system requirement. For example, division is performed based on a delay. A function whose processing time needs to meet a delay requirement is set on the DU, and a function whose processing time does not need to meet the delay requirement is set on the CU. In another design, the CU may also have one or more functions of a core network. One or more CUs may be disposed in a centralized manner, or may be disposed separately. For example, the CU may be disposed on a network side to facilitate centralized management. The DU may have a plurality of radio frequency functions, or the radio frequency functions may be set remotely.

The function of the CU may be implemented by one entity or by different entities. For example, the function of the CU may be further divided. For example, a control plane (control plane, CP) and a user plane (user plane, UP) are separated, that is, a control plane of the CU (CU-CP) and a user plane of the CU (CU-UP) are separated. For example, the CU-CP and the CU-UP may be implemented by different functional entities, and are connected through an interface E1. The CU-CP and the CU-UP may be coupled to the DU to jointly complete a function of the base station.

Embodiments of this application are applicable to a scenario in which a terminal device obtains OSI when initially accessing a cell of a base station. Currently, which SIBs are included in an SI message is specified by SI scheduling information (si-SchedulingInfo) in a SIB1, and the SI scheduling information further indicates a scheduling manner of the OSI. In embodiments of this application, after downlink synchronization is implemented between the terminal device and the cell of the base station, the terminal device may receive the SIB1, and determine the scheduling manner of the OSI based on the SIB1, to obtain the OSI in a corresponding scheduling manner. The OSI is system information other than a MIB and the SIB 1. For example, in an NR system, the OSI includes at least one of a SIB2 to a SIB14.

A scheduling manner of the SIB in the OSI may include an on-demand scheduling manner and a broadcast-based scheduling manner.

In the on-demand scheduling manner, the terminal device may request the SIB in the OSI from the base station by using a message 1 or a message 3 in a random access process. If the SIB is requested by using the message 1, the base station preconfigures a correspondence between the SIB and a preamble (preamble), and notifies the terminal device of the correspondence. The terminal device may request a corresponding SIB by sending, in the random access process, a preamble corresponding to the requested SIB. If the SIB is requested by using the message 3, the terminal device sends a number of the requested SIB in the message 3 in the random access process. For example, if the number is 2, the terminal device requests the SIB2. In this way, the terminal device may request a corresponding SIB. In addition, a SIB in the OSI is carried in an SI message, and one SIB is included in only one SI message. Therefore, the terminal device may obtain the SIB by initiating an SI request. In the scheduling manner, if there are a large quantity of terminal devices that actually need to receive the SIB, the large quantity of terminal devices request the SIB, causing a large quantity of signaling overheads and impact caused by the terminal device requesting the system information block in a request manner on random access of another terminal device. Consequently, an access success rate of the terminal device is reduced.

In the broadcast-based scheduling manner, the base station sends the SIB in the OSI in a broadcast manner. In the scheduling manner, regardless of whether there is a terminal device that needs the SIB, the SIB needs to be broadcast periodically, and a large quantity of resources need to be consumed.

Therefore, how to configure a scheduling manner of the SIB in the OSI, to achieve a better balance between resource utilization and the access success rate of the terminal device is an urgent problem to be resolved.

In embodiments of this application, an artificial intelligence (artificial intelligence, AI) technology is combined with the scheduling manner of the SIB in the OSI, and a proper scheduling manner of the SIB in the OSI is inferred through prediction of a requirement of the terminal device for the SIB in the OSI by using the AI. In this application, different scheduling manners may be further used for the SIB in the OSI in different time periods, to meet requirements of the terminal device for the SIB in the OSI in different time periods, and therefore to reduce a waste of time-frequency resources, and reduce a case in which the access success rate of the terminal device is reduced during SI requesting. For ease of description, a "SIB" or a "system information block" in the following descriptions of embodiments of this application may be a SIB other than the MIB and the SIB1, that is, a SIB in the OSI, unless otherwise specified.

For ease of understanding, the AI technology is first described. It may be understood that the description is not intended to limit embodiments of this application. AI is a technology that performs complex computing by simulating the human brain. With the improvement of data storage and capabilities, the AI is increasingly applied. Release 17 (release17, R17) of the 3rd generation partnership project (3rd generation partnership project, 3GPP) has passed a study item (study item, SI) and proposed application of Al to NR.

FIG. 2 is an example diagram of a first application framework of AI in a communications system. A data source (data source) is configured to store training data and inference data. A model training node (model training host) analyzes or trains the training data (training data) provided by the data source to obtain an AI model, and deploys the AI model in a model inference node (model inference host). The model inference node uses the AI model to perform inference based on the inference data provided by the data source and obtain an inference result. The inference result is used for providing reasonable AI-based prediction on network running, or guiding a network to perform policy configuration or policy adjustment. Related policy configuration or policy adjustment is uniformly planned by an execution entity (actor), and is sent to a plurality of execution objects (for example, network entities) for execution. In addition, after a related policy is applied, specific performance of the network may be input to the data source again for storage.

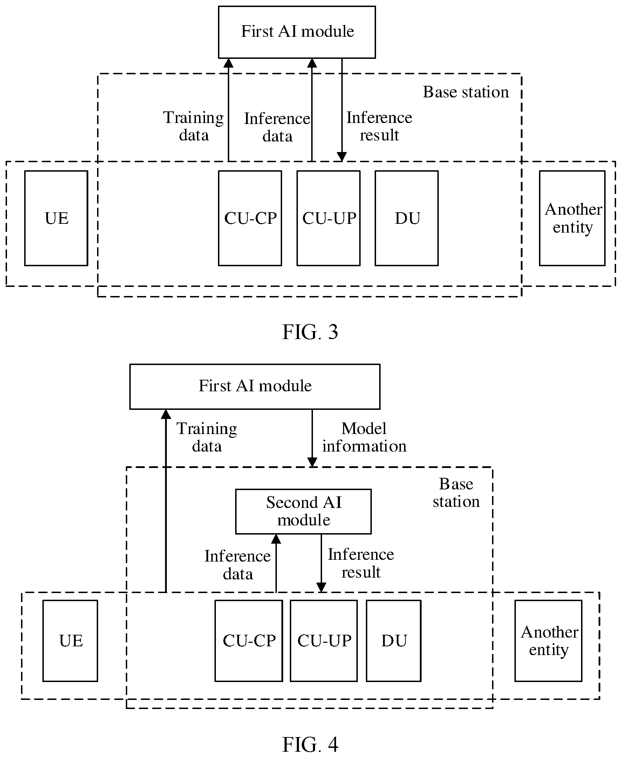

FIG. 3, FIG. 4, or FIG. 5 is an example diagram of a second application framework of AI in a communications system.

In FIG. 3, a first AI module is independent of a base station, and the first AI module analyzes or trains training data to obtain an AI model. For a specific parameter, the first AI module may perform inference by using a corresponding AI model and inference data, to obtain the parameter. In FIG. 3, inference data of the first AI module may be data from the base station, a CU, a CU-CP, a CU-UP, a DU, UE, and/or another entity. An inference result of the first AI module may be sent to the base station, the CU, the CU-CP, the CU-UP, the DU, the UE, or the like, to perform policy configuration or policy adjustment. AI models used for inference of different parameters may be the same or may be different. This is not limited.

The another entity includes but is not limited to a trace collection entity (trace collection entity, TCE), a user plane function (User Plane Function, UPF), an access and mobility management function (access and mobility management function, AMF), and the like.

In FIG. 4, the first AI module is independent of the base station, and the second AI module is located in the base station. After the first AI model is trained by using the training data, the first AI module may send information about the first AI model to the second AI module located in the base station (or described as located in a RAN), and the second AI module performs inference by using the corresponding AI model and inference data, to obtain an inference result. In FIG. 4, inference data of the second AI module may be data from the base station, the CU, the CU-CP, the CU-UP, the DU, the UE, and/or another entity. The inference result of the second AI module may be sent to the base station, the CU, the CU-CP, the CU-UP, the DU, the UE, or the like.

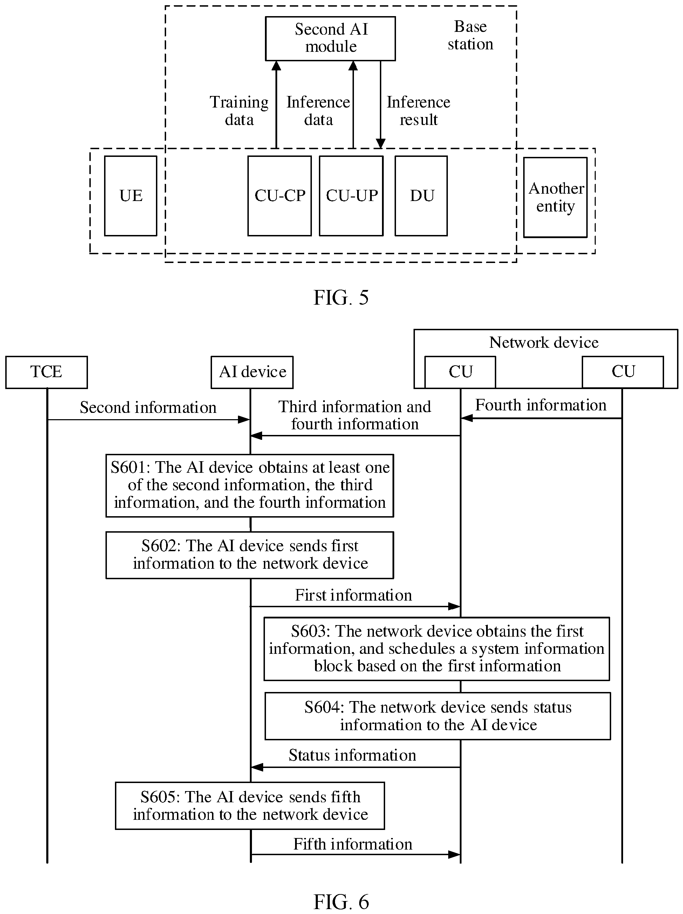

In FIG. 5, the second AI module is located in the base station, and the second AI module in the base station is configured to infer an AI model. To be specific, the second AI module receives training data, and performs training by using the training data. The second AI module may perform inference by using the inference data, to obtain an inference result. In FIG. 5, the inference data of the second AI module may be data from the base station, the CU, the CU-CP, the CU-UP, the DU, the UE, and/or another entity. The inference result of the second AI module may be sent to the base station, the CU, the CU-CP, the CU-UP, the DU, the UE, or the like.

It should be noted that in the frameworks in FIG. 3 to FIG. 5, the AI model may be briefly referred to as a mode, and may be considered as mapping from input information to output information. The input information may include one or more pieces of information, and the output information may include one or more pieces of information. The training data is used for training the AI model. The training data may be data from the base station, the CU, the CU-CP, the CU-UP, the DU, the UE, and/or another entity, and/or data obtained through inference by using an AI technology. This is not limited. The inference data includes an input measurement quantity, which is used for inferring a parameter by using a model.

It may be understood that, in embodiments of this application, an AI device or the base station may perform some or all of the steps in embodiments of this application. The steps or operations are merely examples. In embodiments of this application, another operation or various variations of the operation may be performed. The AI device may be a device including the structure shown in FIG. 2. The AI device may also be referred to as an AI node, an AI entity, or the like. This is not limited. In addition, the steps may be performed in different sequences presented in embodiments of this application, and it is possible that not all operations in embodiments of this application need to be performed.

In embodiments of this application, unless otherwise specified or logically conflicted, terms and/or descriptions in different embodiments are consistent and may be mutually referenced, and technical features in different embodiments may be combined to form a new embodiment based on internal logical relationships of different embodiments.

It may be understood that numerical symbols involved in embodiments of this application are differentiated merely for ease of description, but are not intended to limit the scope of embodiments of this application. Sequence numbers of the foregoing processes do not mean execution sequences. The execution sequences of the processes should be determined based on functions and internal logic of the processes.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

FIG. 6 is a schematic flowchart of a communications method according to an embodiment of this application. In the procedure, an example in which an AI device is independent of a network device is used for description. Alternatively, the AI device may be located in a CU or a DU of the network device, or may be located in an operation administration and maintenance (operation administration and maintenance, OAM) device, or may be located on a network device side or a core network side as an independent module. The method includes the following steps.

S601: An AI device obtains at least one of second information, third information, and fourth information.

At least one of the second information, the third information, and the fourth information is input information needed for the AI device to infer a scheduling manner of a system information block. The second information, the third information, and the fourth information may be directly used as input information for an inference function, or may undergo processing, such as an operation, of the AI device before being used as the input information for the inference function. This is not limited.

In embodiments of this application, the second information may indicate a quantity of terminal devices that expect to obtain the system information block. The system information block in the procedure shown in FIG. 6 may be OSI, for example, any one of a SIB2 to a SIB14. In addition, for ease of description, only one system information block is used as an example for description herein. In this embodiment of this application, the AI device may obtain second information corresponding to N system information blocks, that is, one of the N system information blocks corresponds to one piece of second information. The second information indicates a quantity of terminal devices that expect to obtain the system information block corresponding to the second information, and N is an integer greater than 0. The terminal device herein may be a terminal device located in a cell of a network device. The AI device may obtain minimization of drive test (minimization of drive test, MDT) data of a plurality of terminal devices in the cell of the network device. The MDT data may indicate a number of a system information block that the terminal device expects to obtain, that is, system information blocks that the terminal device expects to obtain may be reported by using the MDT.

How the AI device specifically obtains the MDT data is not limited in this application. For example, the AI device may obtain the MDT data of the plurality of terminal devices by using a trace collection entity (trace collection entity, TCE). In an implementation, the AI device may actively request the MDT data of the terminal device from the TCE. In another implementation, the TCE may periodically report the MDT data of the terminal device to the AI device. This is not limited in this embodiment of this application.

The AI device may determine, by using the MDT data of the terminal device, the system information block that the terminal device expects to obtain, to determine a quantity of terminal devices that are in the cell of the network device and that expect to obtain each system information block.

For example, the AI device obtains m pieces of MDT data. It is assumed that the m pieces of MDT data respectively indicate the following system information blocks that are expected to be obtained.

MDT data corresponding to a terminal device 1 indicates system information blocks that are expected to be obtained: a SIB2, and a SIB 10;
MDT data corresponding to a terminal device 2 indicates system information blocks that are expected to be obtained: a SIB3, a SIB4, a SIB9, and a SIB11;
MDT data corresponding to a terminal device 3 indicates system information blocks that are expected to be obtained: the SIB2, a SIB5, and a SIB6;

MDT data corresponding to a terminal device m indicates system information blocks that are expected to be obtained: the SIB6, the SIB9, a SIB12, and a SIB13.

The quantity of terminal devices that expect to obtain each system information block may be determined based on the m pieces of MDT data. Examples are as follows.

A quantity of terminal devices that expect to obtain the SIB2: 22; and a quantity of terminal devices that expect to obtain the SIB3: 12;
A quantity of terminal devices that expect to obtain the SIB4: 5; and a quantity of terminal devices that expect to obtain the SIB5: 11;
A quantity of terminal devices that expect to obtain the SIB6: 6, and a quantity of terminal devices that expect to obtain a SIB7: 30;
A quantity of terminal devices that expect to obtain a SIB8: 32; and a quantity of terminal devices that expect to obtain the SIB9: 15;
A quantity of terminal devices that expect to obtain the SIB10: 8; and a quantity of terminal devices that expect to obtain the SIB 11: 22;
A quantity of terminal devices that expect to obtain the SIB 12: 12, and a quantity of terminal devices that expect to obtain the SIB 13: 8;
A quantity of terminal devices that expect to obtain the SIB 14 is 7.

In embodiments of this application, the third information indicates a current scheduling manner of the system information block. For example, the current scheduling manner of the system information block may be a scheduling manner in which the system information block is scheduled for the last time before first information is determined.

In an implementation, the AI device may request the third information from the network device or a CU of the network device, and the AI device may request to obtain current scheduling manners of a plurality of system information blocks at a time. The CU of the network device may obtain the third information from a DU of the network device, and forward the third information to the AI device. In another implementation, the network device or the CU of the network device may periodically send the third information to the AI device, and the third information of a plurality of system information blocks may be obtained in each cycle, that is, the current scheduling manners of the plurality of system information blocks are obtained.

If the system information block is in a broadcast-based scheduling manner, the third information may further indicate information such as a broadcast cycle of the system information block, a frequency domain resource, and a cell (cell) or an area (area) in which the system information block is broadcast. As described above, the AI device may obtain the third information of the plurality of system information blocks. For example, the current scheduling manners of the plurality of system information blocks may be shown in Table 1.

**Table 1**

| | | | | |
|---|---|---|---|---|
| Number of a system information block | 2 | 3 | ... | 14 |
| Scheduling manner | Broadcast | On-demand | ... | On-demand |

In this embodiment of this application, if the scheduling manner of the system information block is an on-demand scheduling manner, the fourth information may be further obtained. The fourth information may indicate at least one of the following: a quantity of times that the system information block is requested, a quantity of preambles corresponding to the system information block, and a quantity of times that the system information block fails to be requested.

The quantity of times that the system information block is requested includes a quantity of times that the system information block is requested by using a message 1 and a quantity of times that the system information block is requested by using a message 3. In this embodiment of this application, the quantity of times that the system information block is requested by using the message 1 and the quantity of times that the system information block is requested by using the message 3 may be respectively indicated, or a total quantity of times that the system information block is requested may be indicated. The quantity of times that the system information block fails to be requested may be determined by using a random access channel (random access channel, RACH) report of the terminal device, and the RACH report may indicate an access failure caused by a message 3 conflict.

In an implementation, the AI device may request the fourth information from the network device or the CU of the network device. The CU of the network device may obtain the fourth information from the DU of the network device, and forward the fourth information to the AI device. The AI device may request the fourth information of a plurality of system information blocks each time. In another implementation, the network device or the CU of the network device may periodically (for example, in a cycle of 320 ms) send the fourth information to the AI device, and the fourth information of the plurality of system information blocks may be obtained in each cycle.

The fourth information may be periodically collected information. For example, information such as the quantity of times that the system information block is requested may be collected at intervals of duration, to obtain the fourth information of the system information block. The fourth information of the plurality of system information blocks may be obtained in each cycle.

S602: The AI device sends the first information to the network device.

The first information indicates a predicted scheduling manner of the system information block. The scheduling manner indicated by the first information may be a scheduling manner that is of the system information block and that is predicted by the AI device in future duration. The first information may further indicate effective duration of the first information, so that flexibility of scheduling the system information block is improved.

In addition, the AI device may periodically output the first information, so that requirements of the terminal device for the system information block in different time periods can be met, and a waste of time-frequency resources is reduced.

In a possible implementation, when the scheduling manner of the system information block is the on-demand scheduling manner, the first information may further indicate a preamble corresponding to the system information block, and the preamble is used for requesting the system information block.

In a design, the AI device may infer the first information by using an AI model. For the AI model, refer to the descriptions of FIG. 2. The AI device may input at least one of the second information, the third information, and the fourth information into the AI model. The AI model performs AI inference on at least one of the second information, the third information, and the fourth information. An output of the AI model is the first information. This process may be considered as performing AI inference once.

In another design, the AI device may predict, based on at least one of the second information, the third information, and the fourth information, at least one of traffic load of the network device, a success rate at which the terminal device that accesses the network device requests the system information block in a random access manner, or a quantity of terminal devices that expect to obtain the system information block. The AI device may determine the first information based on at least one of the predicted traffic load, success rate, or quantity of terminal devices. This process may be considered as performing AI inference twice. For example, the AI device may input at least one of the second information, the third information, and the fourth information into an AI model, and the AI model performs AI inference on at least one of the second information, the third information, and the fourth information, and outputs at least one of the traffic load, the success rate, or the quantity of terminal devices. The AI device may input at least one of the predicted traffic load, success rate, or quantity of terminal devices into another AI model. An output of the AI model is the first information. A quantity of times of performing AI inference when the AI device determines the first information is not limited. In addition, the traffic load, the success rate, and the quantity of terminal devices that expect to obtain the system information block may be alternatively determined in another manner. This is merely an example for description herein, and determining only by using at least one of the second information, the third information, and the fourth information is not limited.

In an implementation, the traffic load may be determined based on the third information, and the traffic load may be predicted traffic load. For example, it is assumed that N pieces of third information corresponding to the N system information blocks are obtained, where N is an integer greater than 0. In the N system information blocks, a larger quantity of system information blocks in the broadcast-based scheduling manner indicates more broadcast resources to be consumed and higher traffic load. For example, if there are 10 system information blocks in the broadcast-based scheduling manner, the traffic load may be considered to be greater than or equal to 50%; if there are 2 system information blocks in the broadcast-based scheduling manner, the traffic load may be considered to be less than or equal to 15%. The foregoing is merely an example. The traffic load may be alternatively determined in another manner. For example, the traffic load may be alternatively determined by using a service volume of the terminal device in the cell, a quantity of terminal devices that flow from a neighboring cell, the third information, and the like.

In an implementation, the success rate may be determined based on the fourth information. For example, the success rate may be determined based on the quantity of times that the system information block fails to be requested by using the message 3 and the quantity of times that the system information block is requested by using the message 3.

The foregoing is merely an example, and there may be another manner of determining the traffic load and the success rate. This is not limited in this application.

In this embodiment of this application, there may be a plurality of implementations in a specific process of predicting the first information by the AI device. This is not limited in this embodiment of this application.

In a design, if a quantity indicated by the second information is greater than or equal to a first preset threshold, and a scheduling manner indicated by the third information is the on-demand scheduling manner, a scheduling manner indicated by the first information is the broadcast-based scheduling manner.

In a design, if the quantity indicated by the second information is less than the first preset threshold, and the scheduling manner indicated by the third information is the broadcast-based scheduling manner, the scheduling manner indicated by the first information is the on-demand scheduling manner.

In a design, if the scheduling manner indicated by the third information is the on-demand scheduling manner, and the fourth information indicates that the success rate of requesting the system information block in the random access manner is less than or equal to a second preset threshold, the scheduling manner indicated by the first information is the broadcast-based scheduling manner.

In a design, if the scheduling manner indicated by the third information is an on-demand scheduling manner, and the fourth information indicates that a success rate of requesting the system information block in the random access manner is greater than the second preset threshold, the scheduling manner indicated by the first information is the on-demand scheduling manner.

In a design, if the scheduling manner indicated by the third information is the broadcast-based scheduling manner, and the traffic load of the network device is greater than or equal to a third preset threshold, the scheduling manner indicated by the first information is the on-demand scheduling manner.

In a design, if the scheduling manner indicated by the third information is the on-demand scheduling manner, and the traffic load of the network device is less than the third preset threshold, the scheduling manner indicated by the first information is the broadcast-based scheduling manner.

S603: The network device obtains the first information, and schedules the system information block based on the first information.

After the network device obtains the first information, the CU of the network device may forward the first information to a corresponding DU, so that the DU of the network device may schedule the system information block based on the first information.

In an implementation, the first information may be applicable to all DUs of the network device, that is, all the DUs of the network device may schedule the system information block in the scheduling manner indicated by the first information. In another implementation, the first information may be applicable to a part of DUs of the network device, for example, is applicable to only one DU, that is, a part of DUs of the network device schedule the system information block in the scheduling manner indicated by the first information.

In addition, the network device may obtain the first information corresponding to the plurality of system information blocks, and the DU of the network device may schedule the system information blocks based on the first information corresponding to each system information block. A specific scheduling process is not described.

Optionally, S604: The network device sends status information to the AI device. The status information is obtained by scheduling the system information block by the network device based on the first information.

Optionally, S605: The AI device sends fifth information to the network device. The fifth information is determined based on the status information, and the fifth information is used for updating the scheduling manner of the system information block.

The status information may include information such as system running-related data during execution of the first information by the network device, and includes but is not limited to information such as resource utilization of the network device and a success rate of accessing a network by the terminal device in a random access manner.

In an implementation, if the network device or the DU of the network device detects that the success rate of accessing the network by the terminal device in the random access manner is low, for example, less than or equal to a first threshold, the network device may indicate, to the AI device, that the success rate of accessing the network by the terminal device in the random access manner is less than or equal to the first threshold. The first threshold may be obtained through inference by the AI device, or may be a preset threshold, for example, 50%.

Optionally, the status information may further indicate a reason why the success rate of accessing the network is less than or equal to the first threshold. For example, the reason may include: A quantity of preambles used for random access is small, and excessive system information blocks of the preamble are occupied. A large quantity of system information blocks requested by using the message 3 causes a decrease in a contention success rate of the message 3.

When determining, based on the status information, that the success rate of accessing the network by the terminal device is low, the AI device may update the scheduling manner of the system information block. It is assumed that the DU of the network device needs to schedule the N system information blocks. The AI device may indicate to update scheduling manners of all or a part of the N system information blocks from the on-demand scheduling manner to the broadcast-based scheduling manner.

In a possible design, a scheduling manner of a first system information block in the N system information blocks may be updated from the on-demand scheduling manner to the broadcast-based scheduling manner. The first system information block is a system information block that is requested for a quantity of times greater than or equal to a first preset quantity of times.

In a possible design, when the reason why the success rate is less than or equal to the first threshold includes that the quantity of preambles used for random access is small, a scheduling manner of the system information block in the N system information blocks that is requested by using the message 1 and that is in the on-demand scheduling manner may be updated to the broadcast-based scheduling manner.

In a possible design, when the reason why the success rate is less than or equal to the first threshold includes that the quantity of system information blocks requested by using the message 3 is large, a scheduling manner of the system information block in the N system information blocks that is requested by using the message 3 and that is in the on-demand scheduling manner may be updated to the broadcast-based scheduling manner.

In an implementation, the network device may indicate, to the AI device by using the status information, that the resource utilization of the network device or the DU of the network device is greater than or equal to a second threshold, and that expected resource utilization of the network device or the DU of the network device is greater than or equal to the second threshold. The second threshold may be obtained through inference by the AI device, or may be a preset threshold, for example, 80%.

Optionally, the status information may further indicate a percentage or a quantity of resources occupied by the system information block in a specific cycle. For example, a percentage of resources occupied by the system information block in 160 milliseconds (ms) is 5%, or the system information block occupies 24 resource blocks (resource blocks, RBs) in 160 ms.

When determining, based on the status information, that the resource utilization is greater than or equal to the second threshold and the expected resource utilization is greater than or equal to the second threshold, the AI device may update the scheduling manner of the system information block. It is assumed that the DU of the network device needs to schedule the N system information blocks. The AI device may indicate to update scheduling manners of all or a part of the N system information blocks from the on-demand scheduling manner to the broadcast-based scheduling manner.

In a possible design, a scheduling manner of a second system information block in the N system information blocks is updated from the broadcast-based scheduling manner to the on-demand scheduling manner.

A quantity of terminal devices that expect to obtain the second system information block is less than or equal to a second preset quantity.

In a possible design, a system information block in the N system information blocks that occupies resources of a percentage greater than or equal to a preset percentage or that occupies resources of a quantity greater than or equal to a preset quantity is updated from the broadcast-based scheduling manner to the on-demand scheduling manner.

In an implementation, the network device determines that the scheduling manner of the system information block does not match an actual requirement. For example, the system information block is actually requested for a large quantity of times, but the scheduling manner indicated by the first information is the on-demand scheduling manner.

The network device may indicate, to the AI device by using the status information, a number of a system information block whose scheduling manner needs to be changed, so that the AI device can indicate, by using the fifth information, to change the scheduling manner of the system information block whose scheduling manner needs to be changed. For example, a number of the system information block included in the status information is the SIB2 and the SIB6. The AI device may change scheduling manners of the SIB2 and the SIB6.

It can be learned from the foregoing process that a proper scheduling manner is obtained through inference by using the AI module based on the quantity of terminal devices that expect to obtain the system information block and information such as an access success rate of the terminal device, so that a requirement of the terminal device for the system information block can be met, to reduce a waste of time-frequency resources in a cycle and reduce impact caused by the terminal device requesting the system information block in a request manner on random access of another terminal device.

An embodiment of this application further provides a method. A difference from the method procedure shown in FIG. 6 lies in that in the method procedure shown in FIG. 6, the AI device is independent of the network device and is located outside the network device, while in the following method procedure, the AI device is deployed in the DU of the network device, or the DU has a function corresponding to the AI device, and therefore the DU of the network device infers the scheduling manner of the system information block.

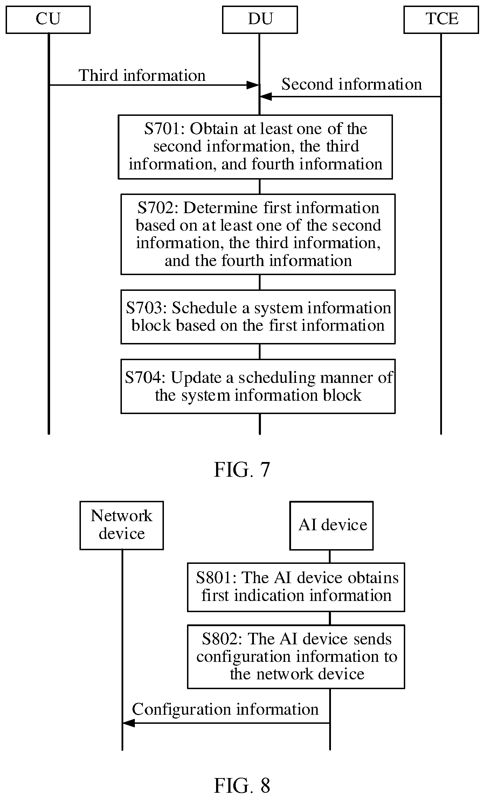

FIG. 7 is a schematic flowchart of a communications method according to an embodiment of this application. The method includes the following steps.

S701: A DU of a network device obtains at least one of second information, third information, and fourth information.

For specific meanings of the second information, the third information, and the fourth information, refer to descriptions of the procedure in FIG. 6. Details are not described herein again.

The DU of the network device may obtain MDT data of a terminal device by using a TCE, to obtain the second information.

The DU of the network device may obtain, from a CU of the network device, a scheduling manner of a system information block in a cell of the DU of the network device, that is, obtain the third information. The DU of the network device may further obtain, from the CU of the network device, a scheduling manner of a system information block in a cell of another DU.

The DU of the network device may determine information such as a quantity of times that the system information block in the cell is requested, a quantity of preambles corresponding to the system information block, and a quantity of times that the system information block fails to be requested, that is, determine the fourth information.

S702: The DU of the network device determines first information based on at least one of the second information, the third information, and the fourth information.

In a design, the DU of the network device may infer the first information by using an AI model. For the AI model, refer to the description of FIG. 2. The DU of the network device may include the AI module. The AI module may input at least one of the second information, the third information, and the fourth information into the AI model. The AI model performs AI inference on at least one of the second information, the third information, and the fourth information. An output of the AI model is the first information. This process may be considered as performing AI inference once.

In another design, the AI module in the DU of the network device may predict, based on at least one of the second information, the third information, and the fourth information, at least one of traffic load of the network device, a success rate at which the terminal device that accesses the network device requests the system information block in a random access manner, or a quantity of terminal devices that expect to obtain the system information block. The AI module may determine the first information based on at least one of the predicted traffic load, success rate, or quantity of terminal devices. This process may be considered as performing AI inference twice.

In this embodiment of this application, the DU of the network device may further send the first information to the CU of the network device. After obtaining the first information of a plurality of DUs, the CU of the network device may comprehensively consider a relationship between the plurality of DUs, and may change the first information of a part or all of the DUs in consideration of aspects such as load, resource utilization, and an access success rate of the terminal device.

In a design, the CU of the network device may output one piece of system information block configuration information by using the AI model and using the first information of the plurality of DUs as input information. The system information block configuration information indicates a scheduling manner of a system information block in each DU. A specific process is not limited, and details are not described herein.

S703: The DU of the network device schedules the system information block based on the first information.

Optionally, S704: The DU of the network device updates the scheduling manner of the system information block.

When scheduling the system information block, the DU of the network device may update the scheduling manner of the system information block when determining, based on information such as the access success rate of the terminal device and resource utilization of the DU, that the scheduling manner of the system information block does not match an actual requirement. For a specific process, refer to the foregoing description. Details are not described herein again.

In the foregoing solution, the AI module is introduced into the DU of the network device, and the DU of the network device predicts the scheduling manner of the system information block in the cell, and schedules the system information block in a predicted scheduling manner, so that a better scheduling manner can be obtained, and system resource utilization can be improved.

Currently, in addition to scheduling information of a SIB 1, a control resource set 0 (control resource set zero, CORESETO) may further carry scheduling information of a system information block in OSI. In this embodiment of this application, whether to configure the CORESETO may be determined based on requirement information for the system information block. Therefore, when the CORESETO is not configured, a resource corresponding to the CORESETO is used for data transmission, to improve resource utilization.

FIG. 8 is a schematic flowchart of a communications method according to an embodiment of this application. In the procedure, an example in which an AI device is independent of a network device is used for description. Alternatively, the AI device may be located in a CU or a DU of the network device, or may be located in an OAM device, or may be located on a network device side or a core network side as an independent module. The method includes the following steps.

S801: An AI device obtains first indication information.

The first indication information indicates a quantity of terminal devices that expect to obtain M system information blocks, M pieces of scheduling information corresponding to the M system information blocks are carried by a first bandwidth unit, M is an integer greater than 0, and one piece of scheduling information is used for scheduling one system information block.

The AI device may obtain MDT data of a plurality of terminal devices by using a TCE, to determine the first indication information based on the MDT data of the plurality of terminal devices. In an implementation, the AI device may actively request the MDT data of the terminal device from the TCE. In another implementation, the TCE may periodically report the MDT data of the terminal device to the AI device. This is not limited in this embodiment of this application.

The first bandwidth unit may be a bandwidth part (bandwidth part, BWP), a subcarrier, or the like. This is not limited in this application. The AI device may further obtain location information of the first bandwidth unit, for example, start and end RB numbers of the first bandwidth unit, for example, RBx to RBy, and for another example, an offset of the first bandwidth unit relative to a BWP 0, for example, an offset of x RBs. The BWP 0 is an initial BWP configured by a network device.

S802: The AI device sends configuration information to the network device, where the configuration information indicates to cancel a control resource set 0 in the first bandwidth unit.

In a design, the AI device may infer the configuration information by using an AI model. For the AI model, refer to the description of FIG. 2. The AI device may input the first indication information into the AI model. The AI model performs AI inference on the first indication information. An output of the AI model is the configuration information. This process may be considered as performing AI inference once.

In a design, the AI device may determine the configuration information when a preset condition is met. For example, the preset condition includes at least one of the following: A quantity of terminal devices that expect to obtain the M system information blocks is less than a third threshold; and a ratio of the quantity of terminal devices that expect to obtain the M system information blocks to a total quantity of terminal devices is less than a fourth threshold. The third threshold and the fourth threshold may be obtained by the AI device through inference by using the AI module, or may be a preconfigured value. The terminal device herein may be a terminal device in an RRC connected state.

For example, when only a few terminal devices, for example, only 5% of all terminal devices that perform data transmission by using the first bandwidth unit, expect to obtain the M system information blocks by using the first bandwidth unit, it may be considered that no CORESETO is configured on the first bandwidth unit. The terminal device herein may be a terminal device in an RRC connected state.

For another example, the first bandwidth unit is the BWP. In all terminal devices that perform data transmission by using the BWP, if a quantity of terminal devices that expect to obtain the M system information blocks by using the BWP is less than the third threshold, it may be considered that the CORESETO is no longer configured and reserved on the terminal devices of the quantity less than the third threshold. If one terminal device performs data transmission by using the BWP, the BWP may be used as an active BWP of the terminal device, that is, an active BWP of the terminal device in the RRC connected state.

In this embodiment of this application, the configuration information may further indicate to send the system information block to the terminal device by using RRC signaling. All system information blocks scheduled by using the CORESETO need to be sent by using the RRC signaling, for example, a SIB1 and a system information block in OSI.

When obtaining the configuration information, the network device may not configure the CORESETO in the first bandwidth unit, and may perform data transmission by using a resource corresponding to the CORESETO.

According to the foregoing solution, when it is determined, based on requirement information for the system information block in the first bandwidth unit, that the CORESETO in the first bandwidth unit is not configured, the resource corresponding to the CORESETO is used for data transmission, so that resource utilization can be improved, and a downlink capacity can be improved.

In the foregoing embodiments provided in this application, the method provided in embodiments of this application is separately described from a perspective of interaction between devices. The steps performed by the network device or the AI device may be alternatively implemented by different communications apparatuses separately. To implement functions in the method provided in embodiments of this application, the network device, the AI device, or the communications apparatus may include a hardware structure and/or a software module, and implement the foregoing functions in a form of the hardware structure, the software module, or the hardware structure and the software module. Whether one of the foregoing functions is performed in the manner of a hardware structure, a software module, or a hardware structure and a software module depends on a specific application and design constraints of the technical solutions.

The module division in embodiments of this application is an example, and is merely logical function division. During actual implementation, there may be another division manner. In addition, functional modules in embodiments of this application may be integrated into one processor, or may exist alone physically, or two or more modules are integrated into one module. The integrated module may be implemented in a form of hardware, or may be implemented in a form of a software functional module.

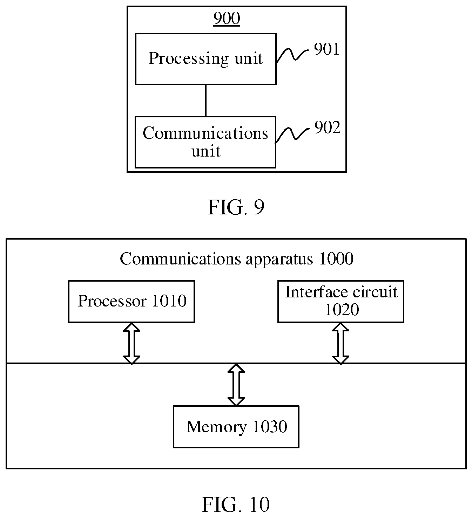

Same as the foregoing concept, as shown in FIG. 9, embodiments of this application further provide a communications apparatus 900. The communications apparatus 900 may implement the methods of the terminal device or the network device in the method embodiments corresponding to FIG. 6 to FIG. 8. For specific functions, refer to the descriptions in the foregoing method embodiments.

Specifically, the communications apparatus 900 may include a processing unit 901 and a communications unit 902. In embodiments of this application, the communications unit may also be referred to as a transceiver unit, and may include a sending unit and/or a receiving unit, respectively configured to perform sending and receiving steps of the network device or the terminal device in the foregoing method embodiments. The following describes in detail the communications apparatus provided in embodiments of this application with reference to FIG. 9 and FIG. 10.

In some possible implementations, the communications unit 902 may be configured to perform receiving or sending operations performed by the AI device in FIG. 6 to FIG. 8, and the processing unit 901 may be configured to perform operations other than the receiving and sending operations performed by the AI device in FIG. 6 to FIG. 8.

In some possible implementations, the communications unit 902 may be configured to perform receiving or sending operations performed by the network device in FIG. 6 to FIG. 8, and the processing unit 901 may be configured to perform operations other than the receiving and sending operations performed by the network device in FIG. 6 to FIG. 8.

When the communications apparatus implements the functions of the AI device in the procedures shown in FIG. 6 to FIG. 8:
a processing unit is configured to determine first information, where the first information indicates a predicted scheduling manner of a system information block, the first information is determined based on at least one of second information, third information, or fourth information, the second information indicates a quantity of terminal devices that expect to obtain the system information block, and the third information indicates a current scheduling manner of the system information block, and when the current scheduling manner of the system information block is an on-demand scheduling manner, the fourth information indicates at least one of the following: a quantity of times that the system information block is requested, a quantity of preambles corresponding to the system information block, and a quantity of times that the system information block fails to be requested; and
a communications unit is configured to send the first information to the network device.

In a possible design, traffic load of the network device is determined based on the third information. That the first information is determined based on the second information and the third information includes: The first information is determined based on the traffic load of the network device and the quantity of terminal devices.

In a possible design, the traffic load of the network device is determined based on the third information. A success rate at which the terminal device that accesses the network device requests the system information block in a random access manner is determined based on the fourth information. That the first information is determined based on the second information, the third information, and the fourth information includes: The first information is determined based on the traffic load of the network device, the quantity of terminal devices, and the success rate.

In a possible design, the communications unit is further configured to obtain fifth information, where the fifth information is determined based on status information obtained by scheduling the system information block by the network device based on the first information, and the fifth information is used for updating the scheduling manner of the system information block.

In a possible design, there are N system information blocks, N is an integer greater than 0, and the status information includes that a success rate of accessing a network by a terminal device in a random access manner is less than or equal to a first threshold. The fifth information indicates to update scheduling manners of all or a part of the N system information blocks from the on-demand scheduling manner to a broadcast-based scheduling manner.

In a possible design, the processing unit is specifically configured to update a scheduling manner of a first system information block in the N system information blocks from an on-demand scheduling manner to a broadcast-based scheduling manner. The first system information block is a system information block that is requested for a quantity of times greater than or equal to a first preset quantity of times.

In a possible design, there are N system information blocks, N is an integer greater than 0, and the status information includes at least one of the following: resource utilization of the network device is greater than or equal to a second threshold, and expected resource utilization of the network device is greater than or equal to the second threshold. The fifth information indicates to update a scheduling manner of all or a part of the N system information blocks from the broadcast-based scheduling manner to an on-demand scheduling manner.

In a possible design, the processing unit is configured to update a scheduling manner of a second system information block in the N system information blocks from a broadcast-based scheduling manner to an on-demand scheduling manner. A quantity of terminal devices that expect to obtain the second system information block is less than or equal to a second preset quantity.

In a possible design, there are N system information blocks, where N is an integer greater than 0, and the status information includes a number of a system information block that is in the N system information blocks and whose scheduling manner needs to be changed. The fifth information indicates to change the scheduling manner of the system information block whose scheduling manner needs to be changed.

In a possible design, when the scheduling manner of the system information block is an on-demand scheduling manner, the first information further indicates a preamble corresponding to the system information block, and the preamble is used for requesting the system information block.

When the communications apparatus implements the functions of the network device in the procedures shown in FIG. 6 to FIG. 8:
a communications unit is configured to obtain first information, where the first information indicates a scheduling manner of a system information block, the first information is determined based on at least one of second information, third information, or fourth information, the second information indicates a quantity of terminal devices that expect to obtain the system information block, and the third information indicates a current scheduling manner of the system information block, and when the current scheduling manner of the system information block is an on-demand scheduling manner, the fourth information indicates at least one of the following: a quantity of times that the system information block is requested, a quantity of preambles corresponding to the system information block, and a quantity of times that the system information block fails to be requested; and
a processing unit is configured to schedule the system information block based on the first information.

In a possible design, traffic load of the network device is determined based on the third information. That the first information is determined based on the second information and the third information includes: The first information is determined based on the traffic load of the network device and the quantity of terminal devices.

In a possible design, the traffic load of the network device is determined based on the third information. A success rate at which the terminal device that accesses the network device requests the system information block in a random access manner is determined based on the fourth information. That the first information is determined based on the second information, the third information, and the fourth information includes: The first information is determined based on the traffic load of the network device, the quantity of terminal devices, and the success rate.

In a possible design, the communications unit is further configured to: send status information, where the status information is determined based on status information obtained by scheduling the system information block based on the first information; obtain fifth information, where the fifth information is used for updating a scheduling manner of the system information block, and the fifth information is determined based on the status information; and update the scheduling manner of the system information block based on fifth information.

In a possible design, there are N system information blocks, N is an integer greater than 0, and the status information includes that a success rate of accessing a network by a terminal device in a random access manner is less than or equal to a first threshold. The fifth information indicates to update scheduling manners of all or a part of the N system information blocks from the on-demand scheduling manner to a broadcast-based scheduling manner.

In a possible design, the fifth information indicates to update a scheduling manner of a first system information block in the N system information blocks from an on-demand scheduling manner to a broadcast-based scheduling manner. The first system information block is a system information block whose quantity of requests is greater than or equal to a first preset quantity of times.

In a possible design, there are N system information blocks, N is an integer greater than 0, and the status information includes at least one of the following: resource utilization of the network device is greater than or equal to a second threshold, and expected resource utilization of the network device is greater than or equal to the second threshold. The fifth information indicates to update a scheduling manner of all or a part of the N system information blocks from the broadcast-based scheduling manner to an on-demand scheduling manner.

In a possible design, the fifth information indicates to update a scheduling manner of a second system information block in the N system information blocks from a broadcast-based scheduling manner to an on-demand scheduling manner. A quantity of terminal devices that expect to obtain the second system information block is less than or equal to a second preset quantity.

In a possible design, there are N system information blocks, where N is an integer greater than 0, and the status information includes a number of a system information block that is in the N system information blocks and whose scheduling manner needs to be changed. The fifth information indicates to change the scheduling manner of the system information block whose scheduling manner needs to be changed.

The foregoing is merely an example. The processing unit 901 and the communications unit 902 may further perform other functions. For more detailed description, refer to related description in the method embodiments shown in FIG. 6 to FIG. 8. Details are not described herein again.

FIG. 10 shows a communications apparatus 1000 according to an embodiment of this application. The communications apparatus shown in FIG. 10 may be an implementation of a hardware circuit of the communications apparatus shown in FIG. 9. The communications apparatus is applicable to the foregoing flowchart, and performs a function of the terminal device or the network device in the foregoing method embodiments. For ease of description, FIG. 10 shows only main components of the communications apparatus.

As shown in FIG. 10, the communications apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communications apparatus 1000 may further include a memory 1030, configured to store instructions executed by the processor 1010, or store input data needed by the processor 1010 to run the instructions, or store data generated after the processor 1010 runs the instructions.

When the communications apparatus 1000 is configured to implement the methods shown in FIG. 6 to FIG. 8, the processor 1010 is configured to implement a function of the foregoing processing unit 901, and the interface circuit 1020 is configured to implement a function of the foregoing communications unit 902.

When the foregoing communications apparatus is a chip used in a terminal device, the chip of the terminal device implements a function of the terminal device in the foregoing method embodiments. The chip of the terminal device receives information from another module (for example, a radio frequency module or an antenna) in the terminal device, where the information is sent by the network device to the terminal device. Alternatively, the chip of the terminal device sends information to another module (for example, a radio frequency module or an antenna) in the terminal device, where the information is sent by the terminal device to the network device.

When the foregoing communications apparatus is a chip used in the network device, the chip of the network device implements a function of the network device in the foregoing method embodiments. The chip of the network device module receives information from another module (for example, a radio frequency module or an antenna) in the network device, where the information is sent by the terminal device to the network device. Alternatively, the chip of the network device module sends information to another module (for example, a radio frequency module or an antenna) in the network device, where the information is sent by the network device to the terminal device.

It may be understood that the processor in embodiments of this application may be a central processing unit (Central Processing Unit, CPU), or may be another general-purpose processor, a digital signal processor (Digital Signal Processor, DSP), or an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor, or may be any conventional processor.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist in the network device or the terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code. This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

Apparently, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communications method, comprising:
determining first information, wherein the first information indicates a predicted scheduling manner of a system information block, the first information is determined based on at least one of second information, third information, or fourth information, the second information indicates a quantity of terminal devices that expect to obtain the system information block, the third information indicates a current scheduling manner of the system information block, and when the current scheduling manner of the system information block is an on-demand scheduling manner, the fourth information indicates at least one of the following: a quantity of times that the system information block is requested, a quantity of preambles corresponding to the system information block, and a quantity of times that the system information block fails to be requested; and
sending the first information to a network device.

2. The method according to claim 1, wherein traffic load of the network device is determined based on the third information; and
that the first information is determined based on at least one of second information, third information, or fourth information is that the first information is determined based on the second information and the third information, and specifically comprises:
the first information is determined based on the traffic load of the network device and the quantity of terminal devices.

3. The method according to claim 1, wherein traffic load of the network device is determined based on the third information, and a success rate at which the terminal device that accesses the network device requests the system information block in a random access manner is determined based on the fourth information; and
that the first information is determined based on at least one of second information, third information, or fourth information is that the first information is determined based on the second information, the third information, and the fourth information, and specifically comprises:
the first information is determined based on the traffic load of the network device, the quantity of terminal devices, and the success rate.

4. The method according to any one of claims 1 to 3, wherein the method further comprises:
obtaining fifth information, wherein the fifth information is determined based on status information obtained by scheduling the system information block by the network device based on the first information, and the fifth information is used for updating a scheduling manner of the system information block.

5. The method according to claim 4, wherein there are N system information blocks, N is an integer greater than 0, and the status information comprises that a success rate of accessing a network by a terminal device in a random access manner is less than or equal to a first threshold; and
the fifth information indicates to update scheduling manners of all or a part of the N system information blocks from the on-demand scheduling manner to a broadcast-based scheduling manner.

6. The method according to claim 5, wherein updating scheduling manners of all or a part of the N system information blocks from the on-demand scheduling manner to a broadcast-based scheduling manner comprises:
updating a scheduling manner of a first system information block in the N system information blocks from the on-demand scheduling manner to the broadcast-based scheduling manner, wherein
the first system information block is a system information block that is requested for a quantity of times greater than or equal to a first preset quantity of times.

7. The method according to claim 4, wherein there are N system information blocks, N is an integer greater than 0, and the status information comprises at least one of the following: resource utilization of the network device is greater than or equal to a second threshold, and expected resource utilization of the network device is greater than or equal to the second threshold; and
the fifth information indicates to update scheduling manners of all or a part of the N system information blocks from a broadcast-based scheduling manner to the on-demand scheduling manner.

8. The method according to claim 7, wherein updating scheduling manners of all or a part of the N system information blocks from a broadcast-based scheduling manner to the on-demand scheduling manner comprises:
updating a scheduling manner of a second system information block in the N system information blocks from the broadcast-based scheduling manner to the on-demand scheduling manner, wherein
a quantity of terminal devices that expect to obtain the second system information block is less than or equal to a second preset quantity.

9. The method according to claim 4, wherein there are N system information blocks, N is an integer greater than 0, and the status information comprises a number of a system information block that is in the N system information blocks and whose scheduling manner needs to be changed; and
the fifth information indicates to change the scheduling manner of the system information block whose scheduling manner needs to be changed.

10. The method according to any one of claims 1 to 9, wherein when the scheduling manner of the system information block is the on-demand scheduling manner, the first information further indicates the preamble corresponding to the system information block, and the preamble is used for requesting the system information block.

11. A communications method, comprising:
obtaining first information, wherein the first information indicates a predicted scheduling manner of a system information block, the first information is determined based on at least one of second information, third information, or fourth information, the second information indicates a quantity of terminal devices that expect to obtain the system information block, the third information indicates a current scheduling manner of the system information block, and when the current scheduling manner of the system information block is an on-demand scheduling manner, the fourth information indicates at least one of the following: a quantity of times that the system information block is requested, a quantity of preambles corresponding to the system information block, and a quantity of times that the system information block fails to be requested; and
scheduling the system information block based on the first information.

12. The method according to claim 11, wherein traffic load of a network device is determined based on the third information; and
that the first information is determined based on at least one of second information, third information, or fourth information is that the first information is determined based on the second information and the third information, and comprises:
the first information is determined based on the traffic load of the network device and the quantity of terminal devices.

13. The method according to claim 11, wherein traffic load of a network device is determined based on the third information, and a success rate at which a terminal device that accesses the network device requests the system information block in a random access manner is determined based on the fourth information; and
that the first information is determined based on at least one of second information, third information, or fourth information is that the first information is determined based on the first information, the third information, and the fourth information, and comprises:
the first information is determined based on the traffic load of the network device, the quantity of terminal devices, and the success rate.

14. The method according to any one of claims 11 to 13, wherein the method further comprises:
sending status information, wherein the status information is determined based on status information obtained by scheduling the system information block based on the first information;
obtaining fifth information, wherein the fifth information is used for updating a scheduling manner of the system information block, and the fifth information is determined based on the status information; and
updating the scheduling manner of the system information blocks based on the fifth information.

15. The method according to claim 14, wherein there are N system information blocks, N is an integer greater than 0, and the status information comprises that a success rate of accessing a network by a terminal device in a random access manner is less than or equal to a first threshold; and
the fifth information indicates to update scheduling manners of all or a part of the N system information blocks from the on-demand scheduling manner to a broadcast-based scheduling manner.

16. The method according to claim 15, wherein the fifth indication information indicates to:
update a scheduling manner of a first system information block in the N system information blocks from the on-demand scheduling manner to the broadcast-based scheduling manner, wherein
the first system information block is a system information block that is requested for a quantity of times greater than or equal to a first preset quantity of times.

17. The method according to claim 14, wherein there are N system information blocks, N is an integer greater than 0, and the status information comprises at least one of the following: resource utilization of the network device is greater than or equal to a second threshold, and expected resource utilization of the network device is greater than or equal to the second threshold; and
the fifth information indicates to update scheduling manners of all or a part of the N system information blocks from a broadcast-based scheduling manner to the on-demand scheduling manner.

18. The method according to claim 17, wherein the fifth indication information indicates to:
update a scheduling manner of a second system information block in the N system information blocks from the broadcast-based scheduling manner to the on-demand scheduling manner, wherein
a quantity of terminal devices that expect to obtain the second system information block is less than or equal to a second preset quantity.

19. The method according to claim 14, wherein there are N system information blocks, N is an integer greater than 0, and the status information comprises a number of a system information block that is in the N system information blocks and whose scheduling manner needs to be changed; and
the fifth information indicates to change the scheduling manner of the system information block whose scheduling manner needs to be changed.

20. A communications apparatus, configured to implement the method according to any one of claims 1 to 10.

21. A communications apparatus, configured to implement the method according to any one of claims 11 to 19.

22. A communications apparatus, comprising a processor and a memory, wherein the processor is coupled to the memory, and the processor is configured to implement the method according to any one of claims 1 to 10.

23. A communications apparatus, comprising a processor and a memory, wherein the processor is coupled to the memory, and the processor is configured to implement the method according to any one of claims 11 to 19.

24. A computer-readable storage medium, wherein the computer-readable storage medium stores instructions, and when the instructions are run on a computer, the computer is enabled to perform the method according to any one of claims 1 to 19.

25. A computer program product, comprising instructions, wherein when the instructions are run on a computer, the computer is enabled to perform the method according to any one of claims 1 to 19.
